# EUROPÄISCHE PATENTSCHRIFT

(11) **EP 0 780 481 B1**
(45) Veröffentlichungstag und Bekanntmachung des Hinweises auf die Patenterteilung: **19.09.2001**
(21) Anmeldenummer: 95810799.7
(22) Anmeldetag: 15.12.1995
(51) Int. Cl.: C22B 21/00, C22B 7/00

(54) **Verfahren und Anlage zur Rückgewinnung von Aluminium aus Abfällen und Reststoffen**
Method and installation for the recovery of aluminium from wastes and residues
Procédé et installation de récupération d'aluminium à partir de déchets et de résidus

(43) Veröffentlichungstag der Anmeldung: 25.06.1997
(73) Patentinhaber: ALUMINIUM RHEINFELDEN GmbH, 79618 Rheinfelden (DE)
(72) Erfinder: Franke, Alois, D-79618 Rheinfelden. (DE)
(74) Vertreter: Patentanwälte Breiter + Wiedmer AG

(56) Entgegenhaltungen:
- EP-A- 0 086 488
- EP-A- 0 373 673
- EP-A- 0 523 858
- DE-A- 2 054 203
- DE-A- 4 237 161
- DE-B- 1 205 704
- GB-A- 2 229 800
- US-A- 3 272 619
- US-A- 4 264 060
- US-A- 4 394 166

## Beschreibung

Die Erfindung betrifft ein Verfahren zur Rückgewinnung von Aluminium aus mit organischen Verbindungen behafteten Materialien, wobei die organischen Verbindungen durch Pyrolyse unter Bildung von Pyrolysegas und Pyrolysekoks verschwelt und die derart vorbehandelten Materialien eingeschmolzen werden. Im Rahmen der Erfindung liegt auch eine Anlage zur Durchführung des Verfahrens.

Bekannte Verfahren zur Rückgewinnung von Aluminium aus Abfällen und Reststoffen benutzen Salztrommelöfen oder Mehrkammerherdöfen. All diesen Verfahren ist gemeinsam, dass ihre Dioxin- und Furanemission ohne Verdünnung den heute geltenden Emissionswert von 0,1 ng TE/m³ (TE nach NATO-CCMS) überschreitet. Allenfalls kann dieser Grenzwert durch die Anwendung eines Aktivkohlefilters erreicht werden, welcher seinerseits dann mit Dioxinen und Furanen belastet ist. Auch Filterstäube sind bei diesen Verfahren mit Dioxinen und Furanen behaftet.

Aus der EP-A-0523858 ist eine Anlage mit einer Pyrolysetrommel zur Verschwelung von mit organischen Verbindungen behafteten Materialien wie z.B. lackierte Aluminiumdosen bekannt, bei welcher die Pyrolysetrommel von Heissgas durchströmt wird. Hierbei wird das Heissgas über ein zentral in der Schweltrommel angeordnetes Rohr von einer Eintrittsöffnung zu einer Austrittsöffnung und von dort zu einem Nachbrenner geführt. Das im Nachbrenner nachverbrannte und erhitzte Pyrolysegas wird zum einen Teil durch das vorgängig beschriebene Rohr in die Schweltrommel geleitet und zu einem anderen Teil aus dem Kreislaufsystem herausgeführt und einer Nachbehandlung unterzogen. Ein wesentlicher Nachteil dieses vorbekannten Verfahrens wird darin gesehen, dass beim Einschmelzen der verschwelten Materialien durch den noch anhaftenden Pyrolysekoks, insbesondere bei Abfällen mit hohem organischen Anteil, ein hoher Teil des Aluminiums durch Oxidation verloren geht.

Angesichts dieser Gegebenheiten hat sich der Erfinder die Aufgabe gestellt, ein Verfahren sowie eine Vorrichtung der eingangs erwähnten Art zu schaffen, mit welchen auf einfache Weise der Oxidationsverlust von Aluminium beim Einschmelzen vermindert werden kann.

Zur erfindungsgemässen Lösung der Aufgabe führt beim Verfahren, dass der Pyrolysekoks von den vorbehandelten Materialien vor einem Blankglühen abgetrennt wird.

Bei einer bevorzugten Ausgestaltung des erfindungsgemässen Verfahrens werden zudem die blankgeglühten Materialien vor dem Einschmelzen zur Abtrennung von Folienbestandteilen gesichtet.

Zweckmässigerweise wird das Pyrolysegas verbrannt und das heisse Abgas zumindest teilweise in einem geschlossenen Kreislauf als Heizenergie für die Pyrolyse sowie ggf. zur Beheizung von Pyrolysegasleitungen und Verdampfer eingesetzt.

Bevorzugt wird die Verbrennung des Pyrolysegases bei einer Temperatur von mindestens 1200°C durchgeführt und aus dem Kreislauf herausgeführtes Abgas nachfolgend auf eine Temperatur von weniger als 150°C abgeschreckt. Das abgeschreckte Abgas wird ausgewaschen, wobei die ausgeschleuste Waschflüssigkeit eingedampft und die Eindampfrückstände, ggf. nach einer Rezepturkorrektur, als Schmelzsalz zum Einschmelzen der blankgeglühten Materialien eingesetzt werden kann.

Eine zur Durchführung des erfindungsgemässen Verfahrens geeignete Anlage weist eine Pyrolysetrommel mit einem Ausfallgehäuse und einem in diesem angeordneten Siebschuss zur Abtrennung von Feingut, ein von der Pyrolysetrommel abgekoppeltes Blankglühaggregat sowie eine diesem nachgeschaltete Schmelzanlage zum Einschmelzen der blankgeglühten Materialien auf.

Bei einer bevorzugten Ausführungsform der erfindungsgemässen Anlage ragt die Pyrolysetrommel mit einem als Sieb ausgestalteten Endteil zur Abtrennung von Feingut in das Ausfallgehäuse ein. Der unterhalb des Endteils angeordnete Siebschuss kann als verstellbare Klappe ausgebildet sein.

Zwischen dem Blankglühaggregat und der Schmelzanlage kann ein Sichter zur Entnahme von Folienbestandteilen aus dem Materialstrom angeordnet sein.

Das Blankglühaggregat und/oder der Sichter können mittels eines Gemisches aus Schmelzofenabgasen und Luft beheizbar sein.

Bevorzugt ist die Schmelzanlage als Zweikammersystem mit offener Chargierkammer mit Vortex-System und mit einem Herdofen als Heizkammer ausgestaltet.

Der beim erfindungsgemässen Verfahren abgetrennte Pyrolysekoks kann zur Herstellung von Kohlenstoffprodukten, insbesondere Kohleanoden für die Schmelzflusselektrolyse von Aluminium eingesetzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 ein Schema des prinzipiellen Aufbaus einer Recycling-Anlage;
- Fig. 2 ein Grundfliessbild der Anlage von Fig. 1;
- Fig. 3 ein Blockschaltbild der Anlage von Fig. 1;
- Fig. 4 ein Verfahrensfliessbild der Anlage von Fig. 1;
- Fig. 5-7 vergrösserte Ausschnitte aus Fig. 3.

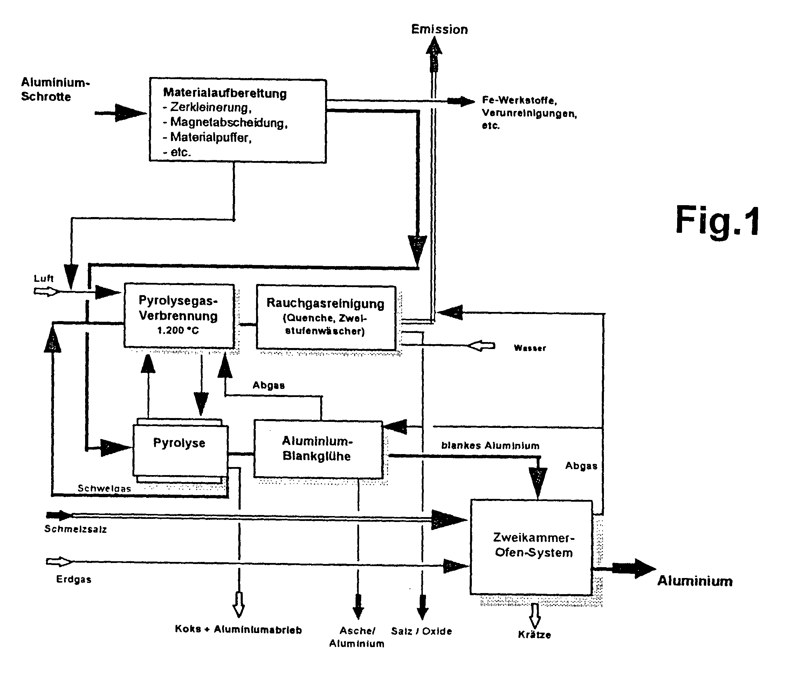

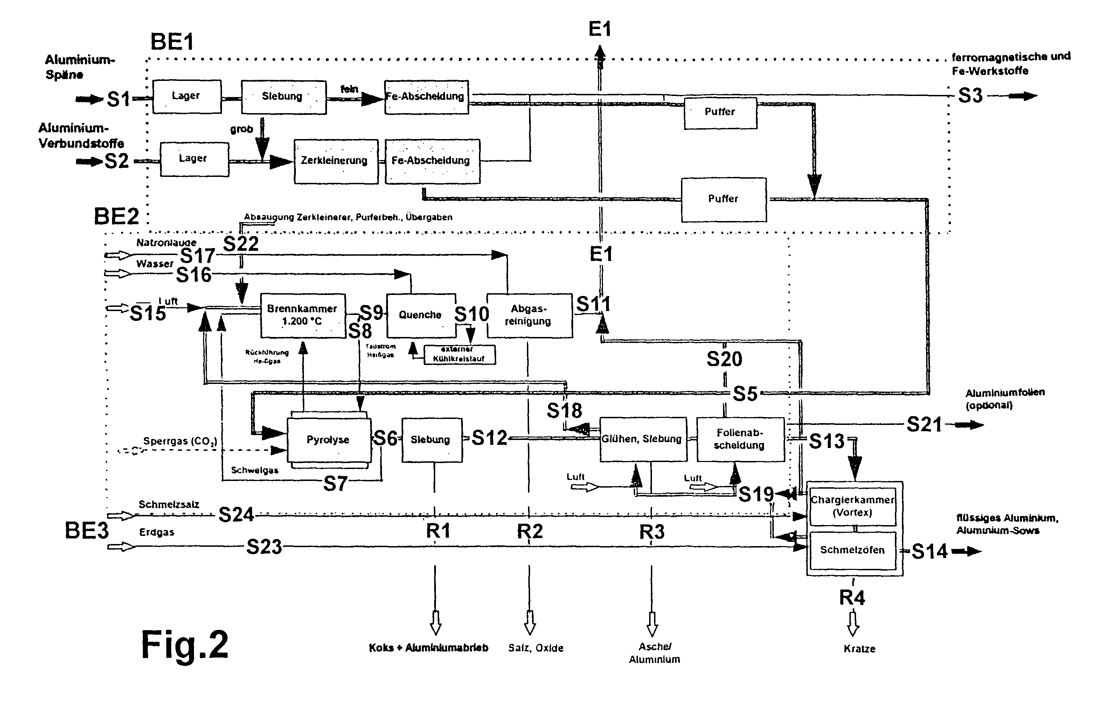

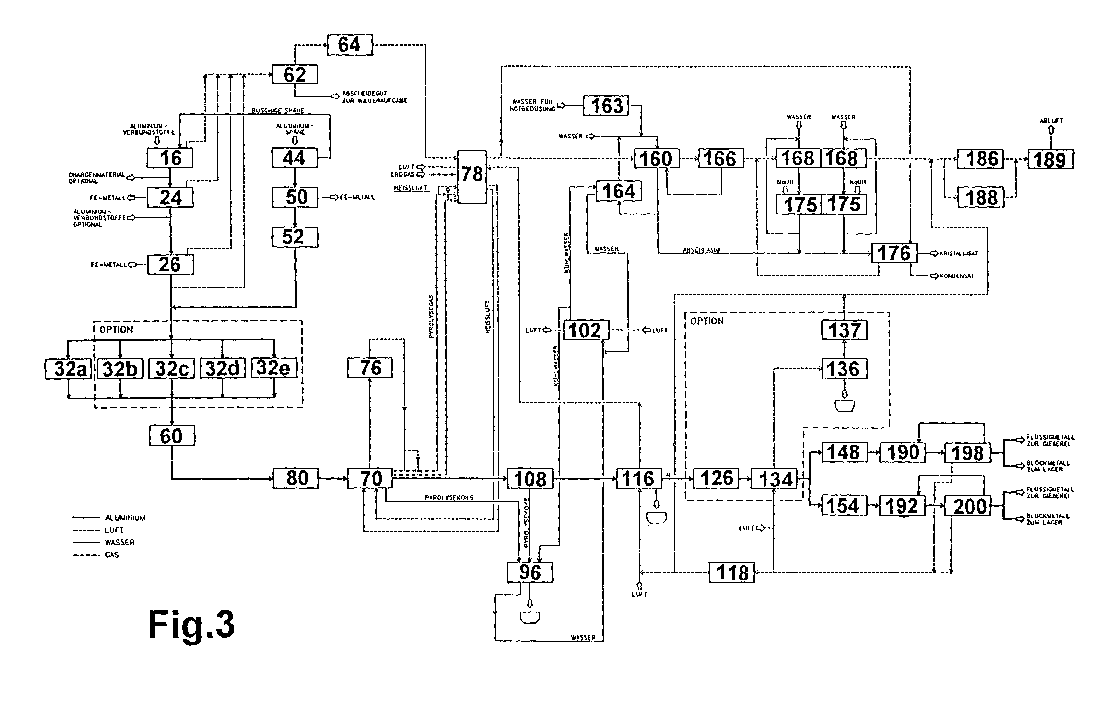

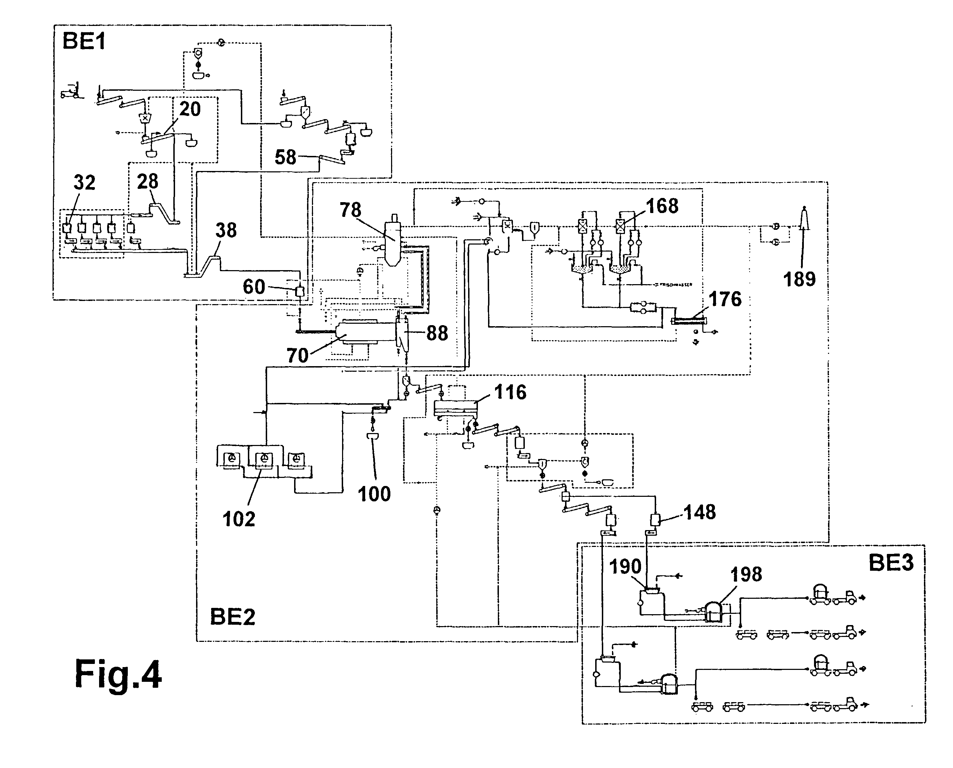

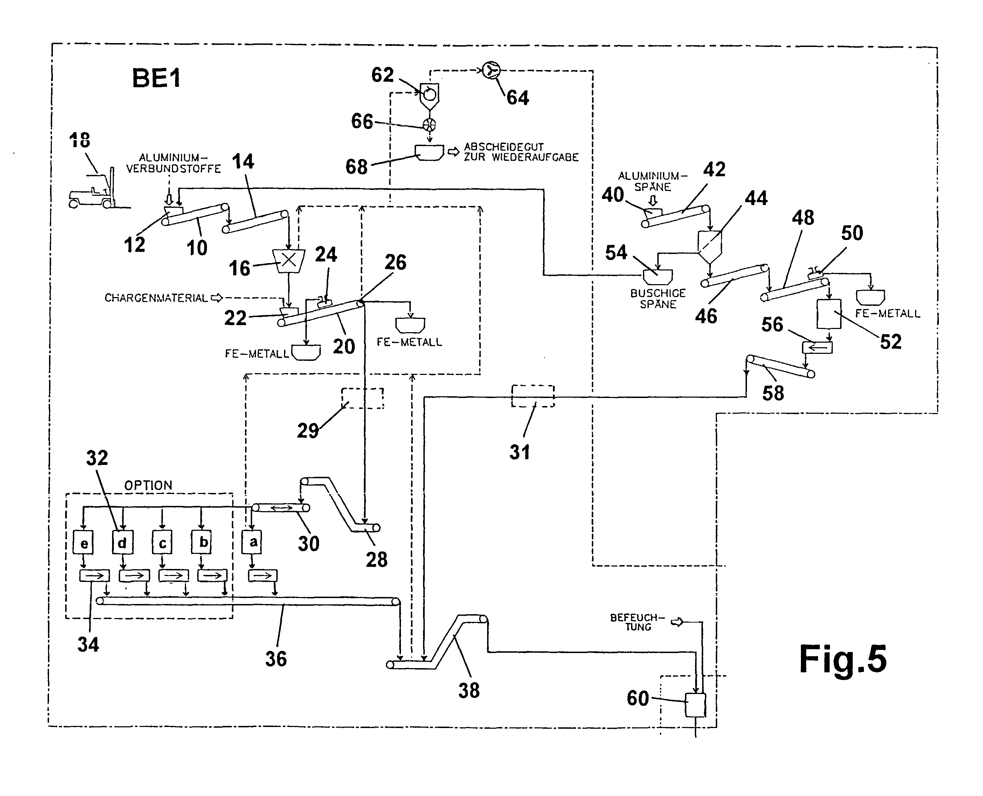

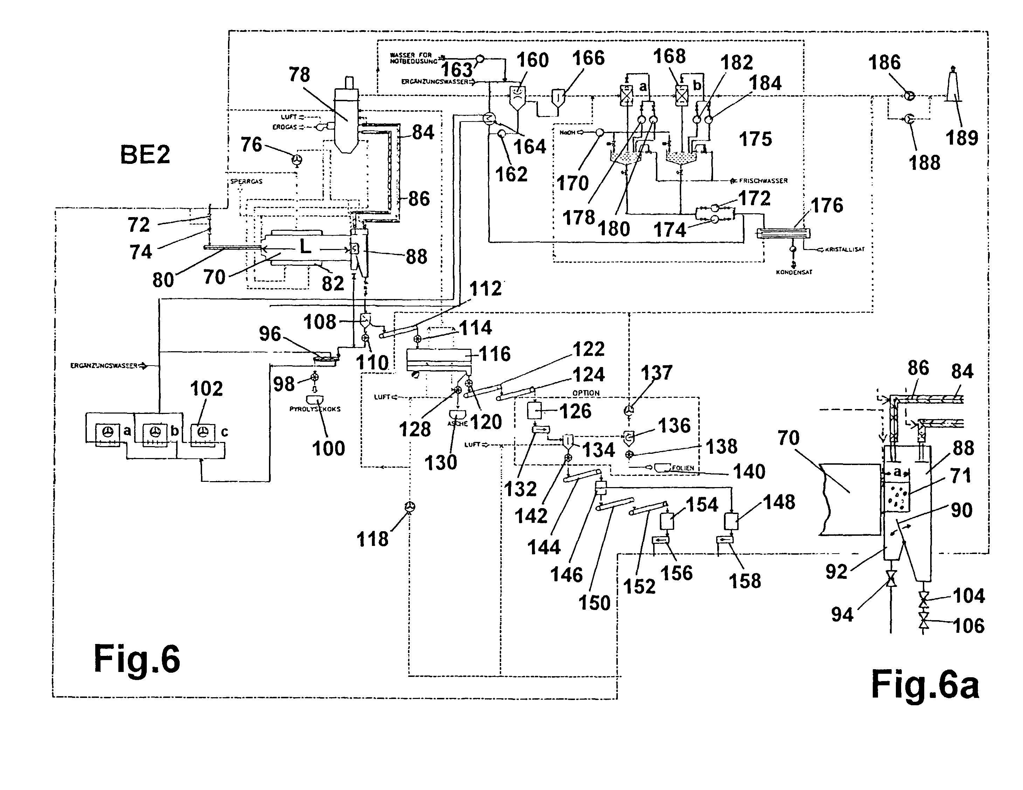

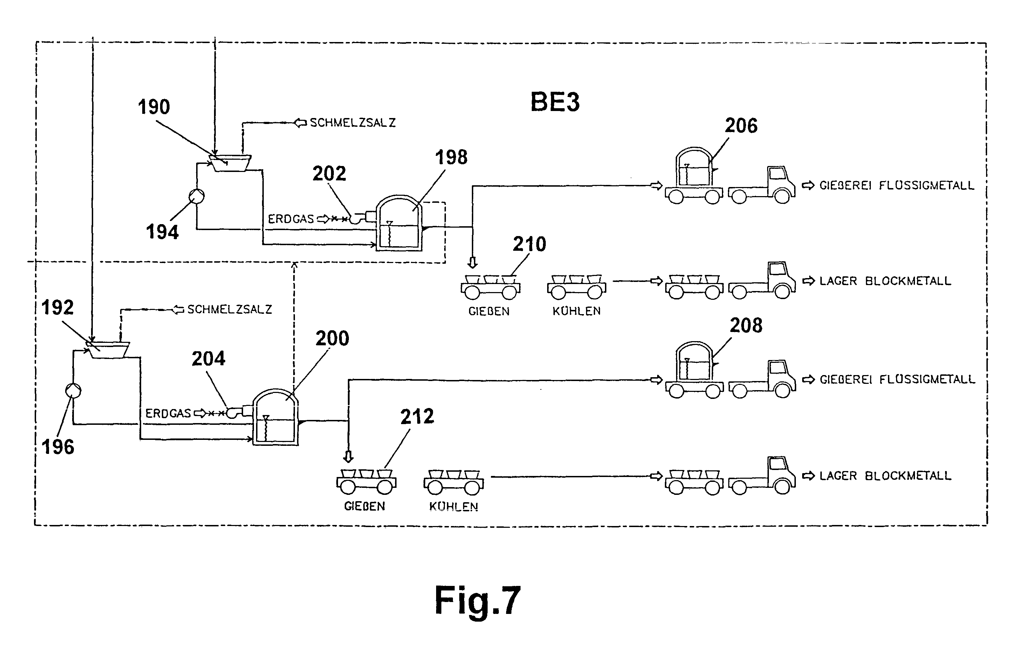

Eine Anlage zur Rückgewinnung von Aluminium aus mit organischen Verbindungen behafteten Aluminium-Schrotten weist gemäss Fig. 1 bis 7 die drei Betriebseinheiten

| | |
|---|---|
| BE1 | Materialaufbereitung |
| BE2 | Decoatinganlage |
| BE3 | Schmelzanlage |

auf.

Der Materialaufbereitung BE1 sind die Materialanlieferung, Lagerung bis zur Chargierung sowie die mechanische Aufbereitung und Vorhaltung (Pufferung) des aufbereiteten Materials für die Decoatinganlage BE2 zugeordnet.

Die Anlieferung der in der Anlage zu verarbeitenden Materialien geschieht in der Regel per LKW oder Bahnwaggon. Die eingehenden Materialien werden verwogen. Art, Herkunft und Mengen des angelieferten Materials werden erfasst und dokumentiert. Je nach Materialart erfolgt eine Eingangsprüfung.

Die Materialaufbereitung BE1 dient der Aufbereitung zweier grundsätzlich verschiedener Materialarten:
- Späne S1 aus der Metallbearbeitung. Diese werden gesiebt, die Grobfraktion wird zerkleinert und Eisenmetalle werden abgetrennt.
- Aluminium-Verbundstoffe S2. Diese werden auf eine stückige Grösse von beispielsweise 30 x 40 mm zerkleinert und Eisenmetalle werden aussortiert. Eingesetzte Stoffe sind hier also z.B. DSD-(Duales System Deutschland) Material, lackierte Bleche und Metallwaren, lackierte Strangpressprofile, lackierte Tuben und Aerosoldosen, flexible Verpackungen aus Aluminium im Verbund mit Kunststoffen oder Papier, gebrauchte Aluminiumdosen, Kühlerschrotte, Röhrchen, Lamellen, Durchstiche, Offset-Bleche, Kabel, geschält, mit Fett, Flaschenkapseln, Nummernschilder, Fahrbahnmarkierungen und Fensterprofile.

Aluminium-Verbundstoffe S2 werden im Falle einer sofortigen Verarbeitung in einem Bereitstellungsraum vor der Grobzerkleinerung zwischengelagert. Die Zuführung der Aluminium-Verbundstoffe S2 zur Grobzerkleinerung erfolgt über einen Aufgabeförderer 10 und einen nachgeschalteten weiteren Aufgabeförderer 14 in ein langsam laufendes Schneidwerk 16. Die Beschickung des ersten Aufgabeförderers 10 erfolgt hierbei über einen Aufgabeschacht 12 mittels eines Staplers 18. Es ist auch möglich, das Schneidwerk 16 direkt mit dem Stapler 18 zu beschicken.

Durch den Einsatz des langsam laufenden Schneidwerks 16 wird bei der Zerkleinerung ein spezifisch geringer Feinkornanteil erzeugt. Aluminium-Späne werden später in den Prozess eingeschleust.

Das grob zerkleinerte Material fällt aus der Rotorschere 16 heraus auf einen Gurtförderer 20; dieser hat zusätzlich einen Aufgabeschacht 22 zur optimalen Aufgabe von Chargenmaterial. Ueber dem Gurtförderer 20 ist ein Ueberbandmagnetabscheider 24 mit Auflockerungshilfe angeordnet. An dieser Stelle werden grobe Eisenbestandteile S3 aus dem Materialfluss entnommen.

Der Gurtförderer 20 ist mit einer integrierten Starkfeldmagnetrolle oder Magnettrommel 26 ausgerüstet. Hier werden weitere Eisenbestandteile S3 einschliesslich Edelstahl abgetrennt.

Die aufbereiteten Aluminium-Verbundstoffe S2 werden mittels Steilförderer 28 und Zuteilungsförderer 30 in einen von insgesamt beispielsweise fünf Pufferbehältern 32 a-e mit einem Fassungsvermögen von beispielsweise je 40 m³ eingetragen.

Die Pufferbehälter 32 sind geschlossen ausgeführt d.h. mit gekapselten Ein- und Austrägen sowie Entlüftung zu einer Absauganlage. Das gespeicherte Material wird bedarfsabhängig über Dosierförderer 34 a-e auf einen Gurtförderer 36 ausgetragen; dieser übergibt an den Zuteilungsförderer 38 zur Decoatinganlage BE2.

Alternativ zur Aufgabe der nach Abtrennung der Eisenbestandteile S3 aufbereiteten Aluminium-Verbundstoffe S2 auf den Steilförderer 28 können diese beispielsweise in einem Querstromsichter 29 nach dem Aluminiumgehalt bzw. dem Heizwert Hᵤ weiter aufgeteilt werden. Die Trennung in aluminiumreiche Bestandteile mit niedrigem Heizwert Hᵤ, z.B. Profilabschnitte, und in aluminiumarme Bestandteile mit hohem Heizwert Hᵤ, z.B. beschichtete Folien, erfolgt im Querstromsichter 29 aufgrund des unterschiedlichen Gewichtes und des spezifischen Anströmquerschnittes. Die verschiedenen Fraktionen mit unterschiedlichem Aluminiumgehalt bzw. unterschiedlichem Heizwert Hᵤ werden sodann in den Pufferbehältern 32 getrennt zwischengelagert.

Aluminiumspäne S1 werden im Bereitstellungsraum aus Späneboxen mittels Radlader entnommen und über einen Aufgabeschacht 40 in einem Aufgabeförderer 42 zu einem Sieb 44 aufgegeben. Das Sieb 44 trennt Grob- und Feinspäne.

Die Feinspäne gelangen über einen Gurtförderer 46 und einen nachgeschalteten weiteren Gurtförderer 48 mit UeberbandMagnetscheider 50 zur Abtrennung der Eisenbestandteile S3 in einen Pufferbehälter 52 mit beispielsweise 20 m³ Fassungsvermögen.

Anfallendes Grobgut wie z.B. buschige Späne werden in einem Sammelbehälter 54 aufgefangen und mittels des Staplers 18 der Zerkleinerungslinie für die Aluminium-Verbundstoffe aufgegeben.

Vor der Aufgabe der Feinspäne auf den Zuteilungsförderer 38 kann der Materialstrom zur Erkennung und nachfolgenden Abtrennung unerwünschter NE-Metalle einen Metalldetektor 31 durchlaufen.

Zusätzlich kann nach Abtrennung der Eisenbestandteile auch für eine stückige Teilfraktion des Querstromsichters 29 der Materialstrom zur Erkennung und nachfolgenden Abtrennung unerwünschter NE-Metalle den Metalldetektor 31 durchlaufen.

Die Feinspäne werden aus dem Pufferbehälter 52 mittels eines Dosierförderers 56 auf einen Gurtförderer 58 gegeben und gelangen so zur Aufbereitungslinie der Aluminium-Verbundstoffe auf den Zuteilungsförderer 38 zur Decoatinganlage BE2.

Das Material aus der Verbund- und Spänelinie gelangt zunächst in einen Pufferbehälter bzw. eine Materialvorlage 60, in der das Material ggf. befeuchtet wird. Von hier aus wird das Eintragssystem einer Pyrolysetrommel 70 beaufschlagt. An Stelle der Befeuchtung im Pufferbehälter 60 kann am Pyrolyseeintragskopf Wasser, Wasserdampf und/oder ein Trägergas, z.B. CO₂, eingedüst werden.

An der Aufbereitungsanlage wird an verschiedenen Stellen wie Zerkleinerer, Uebergabestellen und Materialpuffer Abluft erfasst, um einer diffusen Freisetzung von Emissionen luftfremder Stoffe wie Staub zu begegnen. Die einzelnen Abluftströme werden zusammengeführt und über einen Zyklonabscheider 62 und einen nachgeschalteten Ventilator 64 einer Brennkammer 78 zur Nachverbrennung zugeführt. Im Zyklonabscheider 64 abgeschiedene Feststoffe werden über eine Zellenradschleuse 66 in einen Container 68 ausgetragen und beispielsweise in den Aufgabeschacht 22 chargiert.

Der Decoatinganlage BE2 sind die Pyrolysetrommel, ein Blankglüh-Aggregat, ein Folienabscheider, eine Pyrolysegas-Verbrennung sowie eine Rauchgasreinigung mit Quenche, Wärmetauscher, Zweistufenwäscher, etc. zugeordnet.

Das Material wird der Pyrolysetrommel 70, die eine Länge L von beispielsweise 25 m aufweist, aus der Materialvorbereitung BE1 über die Materaialvorlage 60 und ein Schleusensystem bestehend aus zwei Dichtschiebern 72, 74 zugeführt.

Zur Vermeidung von Pyrolysegasaustritten aus dem Aufgabebereich und Minimierung von Falschlufteinbrüchen in die Pyrolysetrommel 70 wird an das Schleusensystem ein Unterdruck angelegt. Hierzu wird in diesen Raum Inertgas, z.B. CO₂, gespült und das zwischen den beiden Schiebern 72, 74 befindliche Gas gleichzeitig mittels eines Ventilators 76 abgesaugt und mit dem Heizmantel-Abgas S8 der Brennkammer 78 zugeführt.

Die Dichtschieber 72, 74 sind jeweils dichtschliessend ausgeführt. Die Materialzugabe in die Pyrolysetrommel 70 erfolgt getaktet über diese Schiebersysteme. Zur Vermeidung von Falschlufteinbruch in die Trommel kann jeweils nur einer der beiden Schieber geöffnet sein, was mittels einer Endlagenüberwachung gewährleistet ist. Eine weitere Abdichtung erfolgt über die Materialvorlagen über dem ersten Doppelschieber 72, zwischen beiden Dichtschiebern 72, 74 sowie in einer Eintragsschnecke 80, die flüssigkeitsgekühlt sein kann.

Der Pyrolysevorgang geschieht bei ca. 550°C. Aufgrund der Temperatur- und Verweilzeitverhältnisse ist gewährleistet, dass das Material bei Erreichen des Pyrolyseaustragskopfes nach ca. 50 min vollständig pyrolysiert ist. In der Pyrolysetrommel 70 findet eine umfassende Entgasung der Materialien statt.

Die für den Pyrolysevorgang erforderliche Energie wird über einen die Pyrolysetrommel 70 umgebenden Heizmantel 82 zugeführt. Der Heizmantel 82 ist feuerfest ausgekleidet und selbst ohne Brenner ausgeführt; das erforderliche Heissgas S8 wird von aussen von der Brennkammer 78 an den Heizmantel 82 herangeführt und dort gleichmässig an die Pyrolysetrommelwand geleitet. Nach Durchströmen des Heizmantels 82 wird das auf ca. 580°C abgekühlte Heissgas S8 mittels des Ventilators in Heizmäntel 84 von Pyrolysegasleitungen 86 geleitet und anschliessend wieder in die Brennkammer 78 eingespeist. Die Rückführung in die Brennkammer 78 erfolgt im Hinblick auf eine geschlossene Kreislaufführung und konsequente Emissionsminimierung.

Der Heizmantel 82 besteht aus einer Kesselblechkonstruktion mit Feuerfest-Ausmauerung. Zur Vermeidung eines Heizgasaustritts zwischen Heizmantel 82 und Drehdurchführung der Pyrolysetrommel 70 sind Seilzugabdichtungen installiert. Die Dichtung erfolgt durch sich gegenseitig überlappende Gusssegmente, die mittels umschlingendem Drahtseil über arretierende Spannstifte gegen die rotierende Drehofendichtfläche gepresst werden. Aufgrund der Druckverhältnisse im Heizmantel 82, d.h. geringer Unterdruck durch die saugseitige Gebläseanordnung wird ein Heizgasaustritt an die Umgebung ebenfalls bereits konstruktiv verhindert.

Zum Anfahren der Pyrolysetrommel 70 wird, solange noch keine ausreichende Pyrolysegasproduktion stattfindet, Erdgas als Energieträger verwendet. Die Beheizung erfolgt dabei in gleicher Weise, d.h. durch Bereitstellung der Heizenergie aus der Brennkammer 78.

Die Pyrolysetrommel 70 wird an der Austragsseite über einen Zahnkranz mittels Hydraulikantrieb angetrieben, zusätzlich verfügt die Trommel noch über einen Hilfsantrieb. Die Trommeldrehzahl beträgt z.B. 5 Umdrehungen pro Minute und kann variiert werden.

Die Pyrolysetrommel 70 ist an Ein- wie Austragsseite mittels Gleitringdichtung und CO₂-Sperrgasführung abgedichtet.

Die Abtrennung des Pyrolysegases und der Feststoffe erfolgt am Pyrolyseaustragskopf. Das Pyrolysegas wird druckgeregelt abgezogen. Die Druckregelung wie auch die nachfolgende Pyrolysegasleitung 86 ist zur Erhöhung der Betriebssicherheit redundant ausgeführt.

Am Pyrolyseausgangskopf ragt die Pyrolysetrommel 70 mit ihrem Endteil 71 um ein Mass a in ein Ausfallgehäuse 88 ein. Dieser Endteil 71 ist als Sieb zur Auftrennung der aus der Pyrolysetrommel 70 ausgetragenen Feststoffe, in eine gesiebte Feinfraktion und in eine aus dem offenden Endteil 71 austretende Grobfraktion ausgestaltet.

Die aus der Pyrolysetrommel 70 ausgetragenen Feststoffe, die i.w. aus Aluminium sowie aus Koks als Rückstand der organischen Anhaftungen eingesetzter Materialien bestehen, werden mittels zweier Schleusensysteme aus dem Ausfallgehäuse 88 ausgetragen.

Zur Abtrennung des Pyrolysekokses R1 wird das Material zunächst im Austrag der Pyrolysetrommel 70 über einen schwenkbaren Siebschuss 90 geführt. Feingut, i.w. Pyrolysekoks R1, fällt in einen darunterliegenden Schacht 92 und wird von dort zeitgetaktet über einen Dichtschieber 94 entsprechend dem Materialeintrag nach unten ausgetragen.

Ueber die Stellung des als verstellbare Klappe ausgebildeten Siebschusses 90 kann die den beiden Schleusensystemen zuzuweisende Fraktionsgrösse des ausgetragenen Materials eingestellt werden.

Der Pyrolysekoks R1 wird in einer wassergekühlten Kühlschnecke 96 mit Doppelmantel und indirekter Kühlung gekühlt. Aus der Schnecke fällt der gekühlte Koks in eine Zellenradschleuse 98; diese entleert in einen Transportcontainer 100. Die Wärmeabfuhr erfolgt durch einen Kühlwasserkreislauf, an den auch der Quenchewasserkreislauf angeschlossen ist, über insgesamt drei Kühltürme 102a-c.

Die Zusammensetzung des Pyrolysekokses erlaubt einen quantitativen Einsatz bei der Herstellung von Kohlenstoffprodukten, z.B. Anoden für die Aluminium-Elektrolyse.

Das verbleibende Material -- als Siebrückstand des Siebschusses 90 -- wird über ein aus zwei Dichtschiebern 104, 106 bestehendes Schleusensystem entsprechend dem Materialeintrag ausgetragen. Die Dichtschieber 104, 106 sind jeweils ebenfalls dichtschliessend ausgeführt. Der Materialaustrag erfolgt getaktet über diese Schieber. Zur Vermeidung von Falschlufteinbruch in die Pyrolysetrommel 70 kann jeweils nur einer der beiden Schieber geöffnet sein, was mittels einer Endlagenüberwachung gewährleistet ist.

Das Material wird aus dem Schleusensystem heraus auf ein Sieb 108 aufgegeben; auf diesem wird der noch im Materialstrom verbliebene freie Pyrolysekoks R1 als Siebdurchgang (Feingut) von der Aluminium-Fraktion getrennt über eine Zellenradschleuse 110 in die Kühlschnecke 96 ausgetragen; diese entleert -- wie oben beschrieben -- über die Zellenradschleuse 98 in den Transportcontainer 100. Der Pyrolysekoks kann beispielsweise bei der Herstellung von Kohleanoden für die Elektrolyse zur Aluminiumerzeugung verwertet werden.

Der noch mit Pyrolysekoks R1 behaftete heisse Aluminium-Hauptstrom wird über einen Heissgutförderer 112 und eine Zellenradschleuse 114 einem Blankglüh-Aggregat 116 zugeführt. In diesem Blankglüh-Aggregat 116 werden die noch vorhandenen Pyrolysekoksreste auf einem mit sauerstoffgeregelter Heissgaszufuhr durchströmten Schwingboden gezielt verbrannt. Als Heissgas werden anteilig Schmelzofenabgase S19 eingesetzt, denen entsprechend dem Sauerstoffgehalt auf der Abgasseite des Glühaggregates 116 Luft zugemischt wird. Die Heissgaszuführung erfolgt über einen Heissgasventilator 118. Die entstehenden Rauchgase werden der Brennkammer 78 zugeleitet.

Mit Aluminiumpartikeln verunreinigte Asche R3 wird als Siebdurchgang des Blankglüh-Aggregates 116 vom Aluminium-Hauptstrom abgetrennt und über eine Zellenradschleuse 128 in einen Sammelcontainer 130 abgeworfen.

Das geglühte Material, d.h. blankes Aluminium, wird als Siebrückstand über eine Zellenradschleuse aus dem Blankglüh-Aggregat 116 ausgetragen und danach mittels zweier hintereinander geschalteter Heissgutförderer 122, 124 zur Folienabscheidung in einen Pufferbehälter 126 aufgegeben. Aus diesem wird das Material über einen Stetigförderer 132 einem Sichter 134 zugeführt. Hier werden mittels Schmelzofenabgasen S19 und Luft bei einer Mischtemperatur von ca. 400°C durch Windsichtung Folien aus dem Materialstrom entnommen und anschliessend in einem Heissgaszyklon 136 aus der Sichtluft abgeschieden und über eine Zellenradschleuse 138 in einen Sammelcontainer 140 ausgetragen. Das Heissgas verlässt den Heissgaszyklon 136 über einen Heissgasventilator 137. Die abgeschiedenen Folienbestandteile können einer separaten Verwertung zugeführt werden.

Das bei der Windsichtung anfallende Schwergut, d.h. die verbleibende Aluminiumfraktion, gelangt aus dem Sichter 134 über eine Zellradschleuse 142 auf einen Heissgutförderer 144. Dieser mündet in einer Wechselklappe 146, die den Materialstrom, d.h. blankes Aluminium S13, auf zwei Linien aufteilt. Der eine Teil wird direkt in einen Pufferbehälter 148 abgegeben, der andere Teil gelangt über zwei hintereinander geschaltete Heissgutförderer 150, 152 in einen weiteren Pufferbehälter 154.

Beide Pufferbehälter bzw. Silos 148, 154 beschicken mittels Stetigförderern 156, 158 eine angegliederte Schmelzanlage BE3.

Das Pyrolysegas S7 wird aus der Pyrolysetrommel 70 über eine redundante Druckregelung am Ausfallgehäuse 88 entnommen. Die Absaugmenge des Gases richtet sich dabei nach dem Trommelinnendruck.

Das abgetrennte Pyrolysegas wird auf kürzestem Weg mittels der ebenfalls redundant ausgeführten doppelmantelbeheizten Pyrolysegasleitung 86 der Brennnkammer 78 zugeführt. Der Heizmantel 84 der Pyrolysegasleitung 86 wird hierbei mit Heizmantelabgas der Pyrolysetrommel 70 beaufschlagt.

Bei der Brennkammer 78 handelt es sich um eine ausgemauerte hochtemperaturfeste Brennkammer (Brennermuffel), in die das Pyrolysegas über eine Ringleitung rückzündsicher aufgegeben wird. Neben Pyrolysegas werden in die Brennkammer 78 Abgase des Blankglühofens (S18), des Windsichters (S20), verbleibende Rauchgasmengen der Schmelzanlage (S19), Abluft der Aufbereitungsanlage (S22) sowie zusätzlich Frischluft eingespeist. Die Einspeisung der Verbrennungsluft erfolgt gestuft auf verschiedenen Ebenen, um eine möglichst NOx-arme Verbrennung zu erreichen.

Sauerstoffgehalt sowie Temperatur in der Brennkammer 78 werden registrierend überwacht. Es wird eine Brennkammertemperatur von 1200°C gehalten sowie ein Sauerstoffgehalt oberhalb 6% grundsätzlich sichergestellt. Durch die Brennkammergeometrie wird eine Mindestverweilzeit der Rauchgase von 2 sec erreicht. Im An- und Abfahrbetrieb der Anlage wird die Brennkammer mit Erdgas betrieben.

Das Brennkammerabgas wird, sofern es nicht als Teilstrom zur Pyrolysetrommelheizung (S8) genutzt wird, der Quenche 160 zugeleitet. Das für die Beheizung genutzte Brennkammerabgas wird erneut der Brennkammer 78 aufgegeben.

In der Quenche 160 wird das Rauchgas S9 schlagartig auf unter 150°C abgekühlt. Hierdurch wird eine Neubildung polychlorierter p-Dibenzodioxine und Dibenzofurane (PCDD/PCDF) verhindert (Vermeidung einer "de-novo-Synthese"). In Verbindung mit dem bei der Hochtemperaturverbrennung erreichbaren Ausbrand ist eine bestmögliche Verminderung der PCDD/PCDE-Emission durch Primärmassnahmen zu erreichen.

Die schlagartige Abkühlung wird erreicht durch die Eindüsung einer sehr grossen Wassermenge in den Gasstrom. Diese wird durch eine Quenche-Sumpfpumpe bzw. Wasserzirkulationspumpe 162 umgewälzt, Verdunstungsverluste werden laufend niveaugeregelt in den Quenchesumpf ersetzt. Die über das umgewälzte Wasser aus dem Gasstrom entnommene Wärme wird über einen Wärmetauscher 164 an einen zweiten Wasserkreislauf abgeführt und über die insgesamt drei Kühltürme 102a-c an die Umgebung abgegeben. Zur Sicherstellung der Kühlwirkung ist die Quenche 160 mit einem Notbedüsungssystem ausgerüstet; bei Ausfall der Wasserzirkulationspumpe 162 der Quenche 160 kann über eine zusätzliche Notwasser-Pumpe 163 Wasser in die Quenche 160 eingedüst werden. Bei Stromausfall wird dieses System über die Notstromversorgung weiter betrieben.

Nach der Quenche 160 gelangt das abgekühlte Abgas S10 zunächst in einen Tropfenabscheider 166 und anschliessend in einen zweistufig ausgeführten Gaswäscher 168a,b. Am Tropfenabscheider 166 anfallende Flüssigkeit wird in den Quenchekreislauf rezirkuliert.

Das aus der Brennkammer 78 austretende heisse Abgas kann alternativ einer Energienutzung zugeführt werden. Hierzu tritt das Abgas nach dem Austritt aus der Brennkammer 78 in einen Kessel mit Kühlschlangen ein. Das gekühlte Abgas wird der Reinigung zugeführt. Der in den Kühlschlangen auf beispielsweise 400°C erhitzte Wasserdampf wird sodann mit einem Druck von z.B. 38 bar auf einen Generator zur Stromerzeugung geführt.

Als Waschflüssigkeitszusatz im Gaswäscher wird Natronlauge S17 eingesetzt; die Einspeisung erfolgt pH-geregelt über eine Natronlauge-Dosierpumpe 170 in den Sumpf bzw. in die Waschlaugenbehälter 175 der beiden Wäscherstufen. Zusätzlich wird niveaugeregelt Frischwasser nachgespeist. Aus dem Wäscherkreislauf sowie dem Quenchewasserkreislauf wird kontinuierlich Schlammwasser mit Wäscherschlamm (R2) ausgeschleust und mittels Wäschersumpfpumpen 172, 174 einer als Dünnschichtverdampfer 176 ausgestalteten Eindampfanlage zugeführt. Die Waschkreisläufe beider Wäscherstufen werden durch redundante Kreislaufpumpen 178, 180 (Stufe 1) und 182, 184 (Stufe 2) betrieben.

Das gewaschene Abgas S11 verlässt die Rauchgasreinigungsanlage mit einer Temperatur von ca. 85°C sowie wasserdampfgesättigt. Um eine bessere Ableitung der Abgase zu erreichen werden daher durch Zuspeisung noch heisser Schmelzabgase auf eine Temperatur von ca. 105 - 110°C angehoben und anschliessend mittels redundant ausgelegtem Abgasventilator über einen Kamin 190 in die freie Luftströmung abgeleitet.

Aus dem Wäscherschlamm verbleiben nach dessen Eindampfung i.w. Salze sowie Oxide (R2). Diese können, ggf. nach einer Rezepturkorrektur, als Schmelzsalz in der Schmelzanlage BE3 eingesetzt werden.

Die Schmelzanlage BE3 ist ein Zweikammer-System (open well) und besteht aus einer offenen Chargierkammer 190, 192 mit Vortex-System, einer Pumpe 194, 196, einem Herdofen als Heizkammer sowie einem Rinnensystem.

Vom Herdofen 198, 200 wird flüssiges Metall mit einer Pumpe über eine Rinne in die speziell ausgebildete Chargierkammer 190, 192 gefördert und dort in eine Rotationsbewegung versetzt, wodurch ein Wirbel (Vortex) entsteht.

In das rotierende, flüssige Metall wird über das Dosierfördersystem 156, 158 kontinuierlich festes Aluminium in den Wirbel aufgegeben. Bedingt durch die Rotationsbewegung und den Aufgabepunkt wird das feste Aluimium sofort unter die Badoberfläche gezogen und benetzt. Eine Oxidation des Aluminiums wird weitgehend vermieden.

Von der Chargierkammer 190, 192 gelangt der Metallstrom zurück in den Herdofen 198, 200. Dort wird die beim Schmelzvorgang aufgewendete Enthalpie durch Gasbeheizung kompensiert. Hierzu werden Erdgas-Luft-Brenner 202, 204 eingesetzt.

Oxide und Salze bleiben beim Schmelzvorgang auf der Badoberfläche als metallreiche Krätze zurück. In einem betriebsbedingten Rhythmus wird der Herdofen 198, 200 abgekrätzt.

Das schmelzflüssige Aluminium wird chargenweise entweder mit Flüssigmetalltiegel 206, 208 und Transportwagen der Giesserei zugeführt oder über eine Giessgruppe 210, 212 in Formate abgegossen.

Die Schmelzleistung der Anlage ist beispielsweise so ausgelegt, dass insgesamt max. 5 t/h erschmolzen werden können (jeweils 2,5 t/h pro Schmelzaggregat); diese Leistung wird dann gefahren, wenn nur Material mit wenig organischen Anhaftungen pyrolysiert wird. Im Mittel werden etwa 3,4 t/h erschmolzen.

Das erzeugte Metall wird entsprechend seiner Legierungszusammensetzung charakterisiert und verarbeitet.

## Patentansprüche

1. Verfahren zur Rückgewinnung von Aluminium aus mit organischen Verbindungen behafteten Materialien, wobei die organischen Verbindungen durch Pyrolyse unter Bildung von Pyrolysegas und Pyrolysekoks verschwelt und die derart vorbehandelten Materialien eingeschmolzen werden,
**dadurch gekennzeichnet, dass**
der Pyrolysekoks von den vorbehandelten Materialien vor einem Blankglühen abgetrennt wird.

2. Verfahren nach Anspruch 1, **dadurch gekennzeichnet, dass** die blankgeglühten Materialien vor dem Einschmelzen zur Abtrennung von Folienbestandteilen gesichtet werden.

3. Verfahren nach Anspruch 1 oder 2, **dadurch gekennzeichnet, dass** das Pyrolysegas verbrannt und das heisse Abgas zumindest teilweise in einem geschlossenen Kreislauf als Heizenergie für die Pyrolyse sowie ggf. zur Beheizung von Pyrolysegasleitungen und Verdampfer eingesetzt wird.

4. Verfahren nach Anspruch 3, **dadurch gekennzeichnet, dass** die Verbrennung des Pyrolysegases bei einer Temperatur von mindestens 1200°C durchgeführt und aus dem Kreislauf herausgeführtes Abgas nachfolgend auf eine Temperatur von weniger als 150°C abgeschreckt wird.

5. Verfahren nach Anspruch 4, **dadurch gekennzeichnet, dass** das abgekühlte Abgas ausgewaschen, die Waschflüssigkeit eingedampft und die Eindampfrückstände, ggf. nach einer Rezepturkorrektur, als Schmelzsalz zum Einschmelzen der blankgeglühten Materialien eingesetzt werden.

6. Anlage zur Durchführung des Verfahrens nach einem der Ansprüche bis 5, **dadurch gekennzeichnet, dass** sie eine Pyrolysetrommel (70) mit einem Ausfallgehäuse (88) und einem in diesem angeordneten Siebschuss (90) zur Abtrennung von Feingut, ein von der Pyrolysetrommel (70) abgekoppeltes Blankglühaggregat (116) sowie eine diesem nachgeschaltete Schmelzanlage (BE3) zum Einschmelzen der blankgeglühten Materialien aufweist.

7. Anlage nach Anspruch 6, **dadurch gekennzeichnet, dass** die Pyrolysetrommel (70) mit einem als Sieb ausgestalteten Endteil (71) zur Abtrennung von Feingut in das Ausfallgehäuse (88) einragt.

8. Anlage nach Anspruch 7, **dadurch gekennzeichnet, dass** der unterhalb des Endteils (71) angeordnete Siebschuss (90) als verstellbare Klappe ausgebildet ist.

9. Anlage nach einem der Ansprüche 6 bis 8, **dadurch gekennzeichnet, dass** zwischen dem Blankglühaggregat (116) und der Schmelzanlage (BE3) ein Sichter (134) zur Entnahme von Folienbestandteilen aus dem Materialstrom angeordnet ist.

10. Anlage nach einem der Ansprüche 6 bis 9, **dadurch gekennzeichnet, dass** das Blankglühaggregat (116) und/oder der Sichter (134) mittels eines Gemisches aus Schmelzofenabgasen (S19) und Luft beheizbar sind.

11. Anlage nach einem der Ansprüche 6 bis 10, **dadurch gekennzeichnet, dass** die Schmelzanlage (BE3) als Zweikammersystem mit offener Chargierkammer (190,192) mit Vortex-System und einem Herdofen (198,200) als Heizkammer ausgestaltet ist.

## Claims

1. Process for recovery of aluminium from materials contaminated with organic compounds, where the organic compounds are carbonized by pyrolysis under formation of pyrolysis gas and pyrolysis coke, and the materials pretreated in this way are melted,
**characterized in that**
the pyrolysis coke is separated from the pretreated materials before bright annealing.

2. Process according to claim 1, **characterized in that** the bright annealed materials are sorted before melting to separate out foil residue.

3. Process according to claim 1 or 2, **characterized in that** the pyrolysis gas is combusted and the hot waste gas used at least in part in a closed circuit as heat energy for the pyrolysis, and where applicable to heat pyrolysis gas lines and vaporizers.

4. Process according to claim 3, **characterized in that** the pyrolysis gas is combusted at a temperature of at least 1200°C and waste gas extracted from the circuit is then quenched to a temperature of less than 150°C.

5. Process according to claim 4, **characterized in that** the cooled gas is washed out, the washing fluid is vaporized and the vaporization residue, where applicable after recipe correction, can be used as a melting salt for melting the bright annealed materials.

6. Plant for performance of a process according to any of claims 1 to 5, **characterized in that** it has a pyrolysis drum (70) with a precipitation housing (88), and arranged in this a sieve section (90) for separation of fine goods, a bright annealing device (116) decoupled from the pyrolysis drum (70), and connected after this a melting plant (BE3) for melting the bright annealed materials.

7. Plant according to claim 6, **characterized in that** the pyrolysis drum (70) projects with an end part (71) formed as a sieve into the precipitation housing (88) for separation of fine goods.

8. Plant according to claim 7, **characterized in that** the sieve section (90) arranged below the end part (71) can be formed as an adjustable flap.

9. Plant according to any of claims 6 to 8, **characterized in that** between the bright annealing device (116) and the melting plant (BE3) can be arranged a separator (134) for extracting foil residue from the material flow.

10. Plant according to any of claims 6 to 9, **characterized in that** the bright annealing device (116) and/or the separator (134) can be heated by means of a mixture of melting oven waste gases (S19) and air.

11. Plant according to any of claims 6 to 10, **characterized in that** the melting plant (BE3) is designed as a two-chamber system with an open charging chamber (190, 192) with vortex system, and with an open-hearth furnace (198, 200) as the heating chamber.

## Revendications

1. Procédé de récupération d'aluminium à partir de matières où des composés organiques adhèrent à l'aluminium, dans lequel les composés organiques sont consumés par pyrolyse en formant un gaz de pyrolyse et du coke de pyrolyse et les matières ainsi prétraitées sont fondues, **caractérisé en ce que** le coke de pyrolyse est séparé des matières prétraitées avant un recuit blanc.

2. Procédé selon la revendication 1, **caractérisé en ce que** les matières recuites à blanc sont triées avant fusion en vue de séparer des éléments en feuilles.

3. Procédé selon la revendication 1 ou 2, **caractérisé en ce que** en ce que le gaz de pyrolyse est brûlé et que les gaz d'échappement chauds sont utilisés au moins partiellement en circuit fermé en tant qu'énergie de chauffage pour la pyrolyse et éventuellement pour le chauffage de conduites de gaz de pyrolyse et d'un évaporateur.

4. Procédé selon la revendication 3, **caractérisé en ce que** la combustion du gaz de pyrolyse est effectuée à une température d'au moins 1200°C et que le gaz d'échappement extrait du circuit fermé est ensuite refroidi brusquement à une température inférieure à 150°C.

5. Procédé selon la revendication 4, **caractérisé en ce que** le gaz refroidi est lavé, le liquide de lavage est évaporé et les résidus d'évaporation sont utilisés, éventuellement après correction de réception, comme sel de fusion pour la fusion des matières recuites à blanc.

6. Installation de mise en oeuvre du procédé selon l'une quelconque des revendications 1 à 5, **caractérisé en ce qu'**elle comprend un tambour de pyrolyse (70) qui comporte un carter de dégagement (88) et une décharge de tamis (90) agencé dans ce dernier pour séparer les fines, un ensemble (116) de recuit à blanc désaccouplé du tambour de pyrolyse (70), ainsi qu'une installation de fusion (BE3) agencée en aval de cet ensemble pour faire fondre les matières recuites à blanc.

7. Installation selon la revendication 6, **caractérisée en ce que** le tambour de pyrolyse (70) fait saillie dans le carter de dégagement (88) par une partie d'extrémité (71) en forme de tamis, afin de séparer les fines.

8. Installation selon la revendication 7, **caractérisée en ce que** la décharge (90) de tamis agencée au-dessous de la partie d'extrémité (71) consiste en un volet mobile.

9. Dispositif selon l'une quelconque des revendications 6 à 8, **caractérisé en ce qu'**un dispositif de tri (134) est agencé pour prélever des éléments en feuilles hors du flux de matières, entre l'ensemble (116) de recuit à blanc et l'installation de fusion (BE3).

10. Installation selon l'une quelconque des revendications 6 à 9, **caractérisée en ce que** l'ensemble (116) de recuit à blanc et/ou le dispositif (134) peut être chauffé au moyen d'un mélange de gaz d'échappement (S19) du four de fusion et d'air.

11. Installation selon l'une quelconque des revendications 6 à 10, **caractérisée en ce que** l'installation de fusion (BE3) consiste en un système à deux chambres qui inclut une chambre de chargement ouverte (190, 192) à système à vortex et un four à sole (198, 200) servant de chambre de chauffe.
